# FASCICULE DE BREVET EUROPEEN

(11) **EP 4 091 181 B1**
(45) Date de publication et mention de la délivrance du brevet: **10.12.2025**
(21) Numéro de dépôt: 21719699.7
(22) Date de dépôt: 15.01.2021
(51) Int. Cl.: H01F 27/28, H01F 27/40, H01F 27/38, H01F 3/10

(54) **DISPOSITIF ÉLECTROMAGNÉTIQUE DE CONVERSION D'ÉNERGIE**
ELEKTROMAGNETISCHE VORRICHTUNG ZUR ENERGIEUMWANDLUNG
ELECTROMAGNETIC DEVICE FOR CONVERTING ENERGY

(30) Priorité: 16.01.2020 FR 2000391
(43) Date de publication de la demande: 23.11.2022
(73) Titulaire: Commissariat à l'Energie Atomique et aux Energies Alternatives, 75015 Paris (FR)
(72) Inventeur: BOHNKE, Marc, 38054 GRENOBLE CEDEX 09 (FR); CIOBANU, Léana, 38054 GRENOBLE CEDEX 09 (FR); SOUPREMANIEN, Ulrich, 38054 GRENOBLE CEDEX 09 (FR); DELETTE, Gérard, 38054 GRENOBLE CEDEX 09 (FR)
(74) Mandataire: Santarelli
(86) Numéro de dépôt international: PCT/FR2021/050070
(87) Numéro de publication internationale: WO 2021/144541

(56) Documents cités:
- US-A- 4 205 288
- US-A- 5 257 000
- US-A1- 2016 314 895
- US-B1- 7 696 852

## Description

### DOMAINE TECHNIQUE

La présente invention concerne un dispositif électromagnétique de conversion d'énergie, pourvu notamment d'un transformateur. Le transformateur selon la présente invention comprend en particulier une fonction magnétique supplémentaire destinée à créer au moins une inductance de fuite contrôlée.

Les moyens pour mettre en œuvre cette fonction magnétique supplémentaire peuvent également permettre d'assurer une meilleure gestion thermique du transformateur.

### ÉTAT DE LA TECHNIQUE ANTÉRIEURE

Les convertisseurs de puissance miniatures à hauts rendement sont aujourd'hui couramment mis en œuvre dans les équipements électroniques grand public, notamment pour leur recharge.

Ces convertisseurs, notamment ceux comprenant des composants semiconducteurs à grand Gap comme le SiC (Carbure de Silicium) ou le GaN (nitrure de Gallium), peuvent fonctionner à des puissances de l'ordre de la centaine de Watt, et à des fréquences de l'ordre du Mégahertz.

Ces convertisseurs nécessitent d'intégrer différents composants, et plus particulièrement des filtres d'adaptation, des éléments de conversion DC-DC et des éléments passifs (transformateur de tension, inductances des filtres, capacités) dans un volume restreint, et notamment compris entre 30 cm³ à 50 cm³, pour atteindre des densités d'énergie de 1,2 à 1,5 W/cm³ (20 à 25 W/inch³).

À cet effort d'intégration s'ajoute une nécessité pour le convertisseur de présenter un niveau de rendement de conversion électrique élevé.

Afin de répondre à ces dernières exigences, des matériaux mis en œuvre pour la réalisation de noyaux présentant des pertes magnétiques relativement faibles (300mW/cm³ à 25mT et 1,5MHz) ont été développés. Les ferrites, et plus particulièrement le NiZnFe₂O₄., sont à cet égard de bons candidats.

Au niveau du composant, les contraintes de dissipation des pertes thermiques par échauffement imposent, en plus de la réduction du volume et de l'augmentation du rendement, une géométrie adaptée et notamment avec un facteur de forme élevé (supérieur à 20).

Il existe également une volonté d'ajouter à ces convertisseurs des fonctions magnétiques supplémentaires.

Notamment, le convertisseur comprend un transformateur pourvu d'un noyau ferromagnétique autour duquel sont formés deux bobinages dits respectivement, bobinage primaire et bobinage secondaire. Ce transformateur est en particulier destiné à assurer la transformation d'une couple courant/tension, appliqué aux bornes du bobinage primaire, en un autre couple courant/tension délivré aux bornes du bobinage secondaire.

En fonctionnement, un courant traversant le bobinage primaire génère une induction magnétique dans le bobinage secondaire, et dont résulte la circulation d'un courant dans ledit bobinage secondaire.

Cependant, cette induction magnétique, bien qu'en majeure partie confinée dans le noyau ferromagnétique, est sujette à des fuites magnétiques. Ces dernières sont à la source d'une inductance de fuite qui dépend essentiellement de la perméabilité magnétique du noyau ferromagnétique et/ou de la géométrie des bobinages primaire et secondaire.

Dans une configuration de transformateur conventionnelle, correspondant à un noyau entouré de deux bobinages primaire et secondaire, cette inductance de fuite, généralement faible, reste subie, et son évaluation est difficile à prévoir.

Aussi, il est d'ordinaire proposé d'ajouter des fonctions magnétiques supplémentaires qui permettent d'augmenter et de contrôler la valeur de l'inductance de fuite et par voie de conséquence de mieux prévoir le comportement du transformateur. Cette inductance de fuite peut alors jouer le rôle d'une inductance discrète et la remplacer. Ainsi le contrôle de cette inductance de fuite permettrait de supprimer un ou plusieurs composants passifs du circuit.

Toutefois, la mise en œuvre de ces fonctions n'est pour toujours compatible avec les contraintes de réduction de volume du transformateur.

On connaît également les documents US 2016/314895 A1 et US 4205288 A qui traitent respectivement d'un composant de bobine et d'un transformateur à circuits magnétiques parallèles de longueurs moyennes et de caractéristiques de pertes inégales.

Par conséquent, un but de la présente invention est de proposer un dispositif de conversion électromagnétique intégrant une inductance de fuite contrôlée respectant les contraintes de volume imposées pour le convertisseur.

Un autre but de la présente invention est de proposer un dispositif de conversion électromagnétique permettant une meilleure gestion thermique.

### EXPOSÉ DE L'INVENTION

Les buts de la présente invention sont, au moins en partie, atteints par un dispositif de conversion d'énergie électromagnétique qui comprend :
- un noyau ferromagnétique de forme essentiellement plane et délimité par un contour périphérique ;
- un bobinage primaire et un bobinage secondaire formés, respectivement, par des spires primaires et des spires secondaires ;
le dispositif étant caractérisé en ce qu'il comprend, agencés contre le contour périphérique, un premier bloc et un second bloc, comprenant un matériau ferromagnétique, et présentant une perméabilité magnétique inférieure à celle du noyau ferromagnétique, et en ce qu'au moins une spire primaire et/ou au moins une spire secondaire est formée autour du ou traversant le premier bloc et/ou le second bloc pour former, respectivement, une première inductance de fuite et/ou une seconde inductance de fuite.

Selon un mode de mise en œuvre, l'ensemble des spires primaires est formé autour du premier bloc et du noyau ferromagnétique, et/ou l'ensemble des spires secondaires est formé autour du second bloc et du noyau ferromagnétique.

Selon un mode de mise en œuvre, un premier ensemble de spires parmi les spires primaires est formée exclusivement autour du premier bloc, et/ou un second ensemble parmi les spires secondaires est formée exclusivement autour du second bloc.

Selon un mode de mise en œuvre, les spires primaires autres que les spires du premier ensemble sont formées autour du noyau ferromagnétique et du premier bloc, et/ou les spires secondaires autres que les spires du second ensemble sont formées autour du noyau magnétique et du second bloc.

Selon un mode de mise en œuvre, les spires primaires autres que les spires du premier ensemble sont formées exclusivement autour du noyau ferromagnétique, et/ou les spires secondaires autres que les spires du second ensemble sont formées exclusivement autour du noyau ferromagnétique.

Selon la présente invention, le noyau ferromagnétique forme un anneau délimité latéralement par le contour périphérique, le contour périphérique reliant une face supérieure et une face inférieure dudit noyau.

Selon la présente invention, le premier bloc et le second bloc appartiennent à une couronne continue et en appui contre le contour périphérique.

Selon la présente invention, la couronne relie une plaque inférieure, en appui contre la face inférieur du noyau, et une plaque supérieure, en appui contre la face supérieure du noyau, avantageusement, la plaque supérieure, la couronne et la plaque inférieure forme un boîtier à l'intérieur duquel est logé le noyau.

Selon un mode de mise en œuvre, la plaque inférieure et/ou la plaque supérieure comprend une ou plusieurs ouvertures destinées à évacuer la chaleur susceptible d'être générée lors du fonctionnent du dispositif de conversion d'énergie électromagnétique.

Selon un mode de mise en œuvre, le bobinage primaire et le bobinage secondaire comprennent chacun des pions métalliques dits, respectivement, pions primaires et pions secondaires, les pions primaires et les pions secondaires traversant de part en part la plaque inférieure et la plaque supérieure.

Selon un mode de mise en œuvre, le dispositif comprend deux plaques d'interconnexion primaires dites, respectivement, plaque primaire supérieure et plaque primaire inférieure, enserrant, et dans l'ordre, la plaque supérieure, le noyau et la plaque inférieure, la plaque primaire inférieure et la plaque primaire supérieure étant pourvues chacune sur une de leur face de pistes conductrices, dites pistes primaires, agencées pour connecter au niveau de leurs extrémités les pions primaires et ainsi former les spires primaire.

Selon un mode de mise en œuvre, le dispositif comprend deux plaques d'interconnexion secondaires dites, respectivement, plaque secondaire supérieure et plaque secondaire inférieure, enserrant, et dans l'ordre, la plaque primaire supérieure, la plaque supérieure, le noyau, la plaque inférieure et la plaque primaire inférieure, la plaque secondaire inférieure et la plaque secondaire supérieure étant pourvues chacune sur une de leur face de pistes conductrices, dites pistes secondaires, agencées pour connecter au niveau de leurs extrémités les pions secondaires et ainsi former les spires secondaires.

Selon un mode de mise en œuvre, une plaque d'isolation supérieure, faite d'un matériau électriquement isolant, est disposée entre la plaque primaire supérieure et la plaque secondaire supérieure.

Selon un mode de mise en œuvre, une plaque d'isolation inférieure, faite d'un matériau électriquement isolant, est disposée entre la plaque primaire inférieure et la plaque secondaire inférieure.

Selon un mode de mise en œuvre, le premier bloc et le second bloc présentent une perméabilité magnétique comprise entre 1 et 50.

Selon un mode de mise en œuvre, matériau ferromagnétique comprend un matériau de type ferrite, avantageusement dilué dans un polymère.

L'invention concerne également un chargeur pourvu du dispositif selon la présente invention.

L'invention concerne également une fiche USB pourvue du chargeur selon la présente invention.

### BRÈVE DESCRIPTION DES DESSINS

D'autres caractéristiques et avantages apparaîtront dans la description qui va suivre d'un dispositif de conversion d'énergie électromagnétique, donnés à titre d'exemples non limitatifs, en référence aux dessins annexés dans lesquels :
[Fig. 1] est une représentation schématique en vue éclatée du dispositif de conversion d'énergie électromagnétique selon la présente invention ;
[Fig. 2] est une représentation schématique du noyau susceptible d'être mis en œuvre dans le cadre de la présente invention ;
[Fig. 3] est représentation en vue éclatée du noyau de la figure 2 logé dans un boîtier formé par la plaque supérieur, la couronne et la plaque inférieure ;
[Fig. 4] est une représentation schématique de la plaque primaire supérieure et de la plaque primaire inférieure ;
[Fig. 5] est une illustration de la connexion entre les pions primaires via les pistes primaires ;
[Fig. 6] est une représentation schématique de la plaque secondaire supérieure et de la plaque secondaire inférieure ;
[Fig. 7] est une illustration de la connexion entre les pions secondaires via les pistes secondaires.

### EXPOSÉ DÉTAILLÉ DE MODES DE RÉALISATION PARTICULIERS

L'invention concerne un dispositif de conversion d'énergie électromagnétique pourvu d'au moins une inductance de fuite contrôlée. Cette inductance de fuite contrôlée est notamment mise en œuvre par l'adjonction d'un bloc ferromagnétique en appui contre le noyau du dispositif de conversion d'énergie électromagnétique et autour duquel est enroulée au moins une spire d'un des bobinages primaire ou secondaire dudit dispositif.

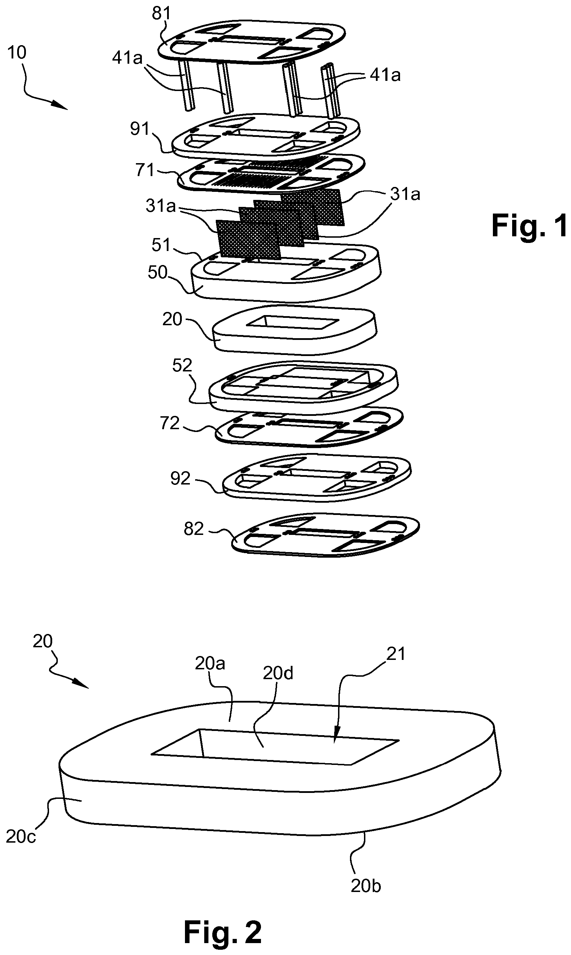

Sur les figures 1 à 7 on peut voir un exemple de mise en œuvre d'un dispositif de conversion 10 d'énergie électromagnétique selon la présente invention.

Le dispositif de conversion 10 peut notamment être mis en œuvre dans un chargeur.

A cet égard, le dispositif de conversion représenté à la figure 1 comprend un noyau ferromagnétique 20 (figure 2) mis en œuvre dans un transformateur.

Le noyau ferromagnétique 20 peut présenter une perméabilité magnétique supérieure à 50 (µᵣ > 50).

Par ailleurs, selon la présente invention, la mention « matériau ferromagnétique » indique qu'il s'agit d'un matériau présentant une perméabilité magnétique supérieure à 1.

Le noyau ferromagnétique, notamment lorsqu'il est mis œuvre dans un transformateur, comprend un matériau ferromagnétique, par exemple sous forme d'un monobloc. Ce matériau présente notamment des valeurs élevées de perméabilité magnétique relative, par exemple supérieures à 50 et d'induction magnétique à saturation Bs, par exemple supérieures à 100 mT.

À cet égard, du fait de la stabilité de leur perméabilité magnétique à haute fréquence, les matériaux oxydes de type ferrite de structure cristallographie spinelle sont des matériaux de choix. Mis en œuvre dans un noyau d'inductance, de tels matériaux ouvrent la voie à des fonctionnements dudit noyau à des fréquences relativement élevées et plus particulièrement comprises entre 100 kHz et 10 MHz. Les formulations les plus courantes de ces matériaux sont Mn₁₋ₓZnxFe₂O₄ et Ni₁₋ₓZnₓFe₂O₄. Ces matériaux se caractérisent également par des valeurs de résistivité électrique élevées limitant les pertes par courants induits.

À titre d'exemple, le noyau ferromagnétique comprend du Mn₁₋ₓZnₓFe₂O₄, avec x compris entre 0,3 et 0,6, la perméabilité magnétique µᵣ évolue avec x, et est comprise entre 500 et 1500.

Les matériaux Mn₁₋ₓZnₓFe₂O₄ et Ni₁₋ₓZnₓFe₂O₄ présentent également l'avantage d'être disponibles à l'échelle industrielle.

Le noyau ferromagnétique 20 peut être de forme essentiellement plane, et plus particulièrement présenter une forme d'anneau.

L'anneau selon la présente invention peut être de forme circulaire, ovale, carrée, rectangulaire, éventuellement avec des coins arrondis. L'invention n'est toutefois pas limitée à ces seules formes,

Par « forme essentiellement plane », on entend un noyau qui présente une épaisseur très inférieure à sa largeur ou à sa longueur. Par « très inférieure », on entend au moins 10 fois inférieure. Par très inférieure on entend que la largeur est égale à 2 à 100 fois l'épaisseur. Un noyau de forme essentiellement plane est caractérisé par le fait que le quadrilatère formé par une de ses sections possède deux côtés de dimensions inférieures à celles des deux autres.

L'anneau formant le noyau ferromagnétique comprend notamment une face supérieure 20a et une face inférieure 20b, essentiellement parallèles, et reliées par un contour périphérique 20c.

Il est également entendu que le noyau ferromagnétique comprend une ouverture traversante 21 qui s'étend de la face inférieure 20b vers la face supérieure 20a, et qui est délimité par une paroi intérieure 20d.

Le dispositif de conversion 10 comprend également un bobinage primaire et un bobinage secondaire formés, respectivement, par des spires primaires et des spires secondaires.

Il est entendu que dans la mesure où le dispositif 10 selon la présente invention est destiné à opérer une conversion d'énergie électromagnétique, les spires primaires et les spires secondaires sont, au moins en partie, formées autour du noyau ferromagnétique 20.

Par « formées autour du noyau ferromagnétique », on entend des spires entourant une section, notamment une section continue, du noyau ferromagnétique, et de sorte que lorsqu'un courant électrique circule dans lesdites spires, un flux magnétique s'écoule, en boucle, dans le noyau. De manière équivalente, un flux magnétique variable dans le temps s'écoulant dans l'anneau formé par le noyau génère, par induction, un courant électrique dans les spires. De manière générale, la section du noyau peut prendre la forme d'un barreau essentiellement droit ou incurvée.

Ainsi, en fonctionnement, lorsqu'un courant primaire d'intensité variable circule dans le bobinage primaire, une variation de flux magnétique traverse les spires du bobinage secondaire formées autour du noyau ferromagnétique 20, et par voie de conséquence induit la circulation d'un courant électrique dans ce même bobinage.

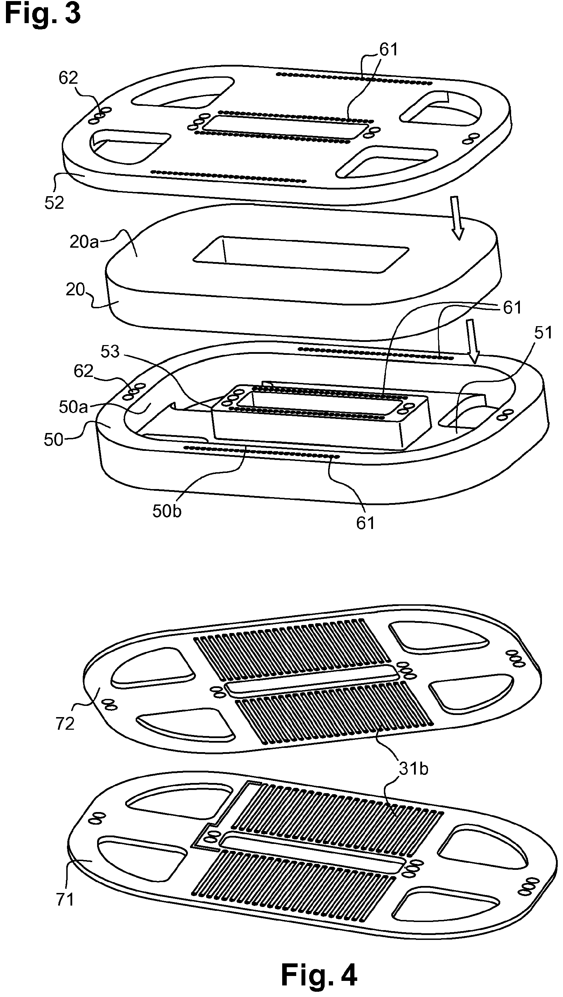

Le dispositif de conversion 10 selon la présente invention comprend également un ou plusieurs premiers blocs 50a et un ou plusieurs seconds blocs 50b (figure 3).

Le premier bloc 50a et le second bloc 50b comprennent un matériau ferromagnétique qui présente une perméabilité magnétique inférieure à celle du noyau ferromagnétique 20.

Le premier bloc 50a et le second bloc 50b peuvent notamment présenter une perméabilité magnétique comprise entre 1 et 50.

Selon un mode de réalisation avantageux, le matériau ferromagnétique formant le premier bloc 50a et le second bloc 50b comprend un matériau de type ferrite, avantageusement dilué dans un polymère.

Le polymère peut notamment comprendre une polyoléfine et un agent rhéofluidisant et/ou lubrifiant.

Par ailleurs, selon la présente invention au moins une spire primaire et/ou au moins une spire secondaire est formée autour du premier bloc 50a et/ou du second bloc 50b pour former, respectivement, une première inductance de fuite et/ou une seconde inductance de fuite.

De manière avantageuse, le premier bloc 50a et le second bloc 50b sont des sections d'une couronne continue 50 en appui contre le contour périphérique 20c. La couronne peut être plus épaisse que le premier 50A et le second 50b bloc.

La couronne 50 selon une mode de réalisation avantageux peut relier une plaque inférieure 51, en appui contre la face inférieur 20b du noyau, et une plaque supérieure 52, en appui contre la face supérieure 20a du noyau ferromagnétique 20 (figures 1 et 3).

La couronne, la plaque supérieure et la plaque inférieure peuvent être faite du même matériau.

Plus particulièrement, la plaque supérieure 52, la couronne 50 et la plaque inférieur 51 forment un boîtier à l'intérieur duquel est logé le noyau ferromagnétique 20 (figure 3).

De manière avantageuse, la couronne 50 et l'une ou l'autre des plaques inférieure 51 et supérieure 52 forment une pièce monobloc.

En particulier, la plaque inférieure 51 peut être surmontée de la couronne 50.

La plaque inférieure 51 peut également comprendre un insert central 53 se conformant à l'ouverture traversante du noyau ferromagnétique 20 (figure 3).

Toujours de manière avantageuse, la plaque supérieure 52, la couronne 50 et la plaque inférieur 51 peuvent être formées selon un procédé de surmoulage sur le noyau ferromagnétique 20.

Par ailleurs, des trous primaires 61 et des trous secondaires 62 sont prévus au niveau de la couronne 50, des plaques supérieures 52 et inférieures 51, de l'insert central 53 pour le passage, respectivement, du bobinage primaire et du bobinage secondaire.

Le bobinage primaire et le bobinage secondaire peuvent comprendre chacun des pions métalliques dits, respectivement, pions primaires 31a et pions secondaires 41a.

En particulier, les pions primaires 31a et les pions secondaires 41a traversent de part en part la plaque inférieure 51 et la plaque supérieure 52. Ces derniers, peuvent également traverser l'insert central 53 et la couronne continue 50.

Des connections additionnelles sont mises en œuvres afin d'assurer la continuité électrique du premier bobinage d'une part, et du second bobinage d'autre part.

En particulier, le dispositif peut comprendre deux plaques d'interconnexion primaires dites, respectivement, plaque primaire supérieure 72 et plaque primaire inférieure 71 enserrant, et dans l'ordre, la plaque supérieure 52, le noyau ferromagnétique 20 et la plaque inférieure 51 (figures 1 et 4).

Notamment, la plaque primaire supérieure 72 et la plaque primaire inférieure 71 sont pourvues, sur l'une ou l'autre de leurs faces, de pistes conductrices, dites pistes primaires 31b, destinées à assurer la continuité électrique du bobinage primaire (figure 4).

La plaque primaire supérieure 72 et la plaque primaire inférieure 71 sont par exemple des circuits imprimés, et comprennent si nécessaire des trous au travers desquels peuvent passer les pions primaires et les pions secondaires.

Ainsi, les spires primaires du bobinage primaire sont formées d'une succession de pions primaires 31a et de pistes primaires 31b.

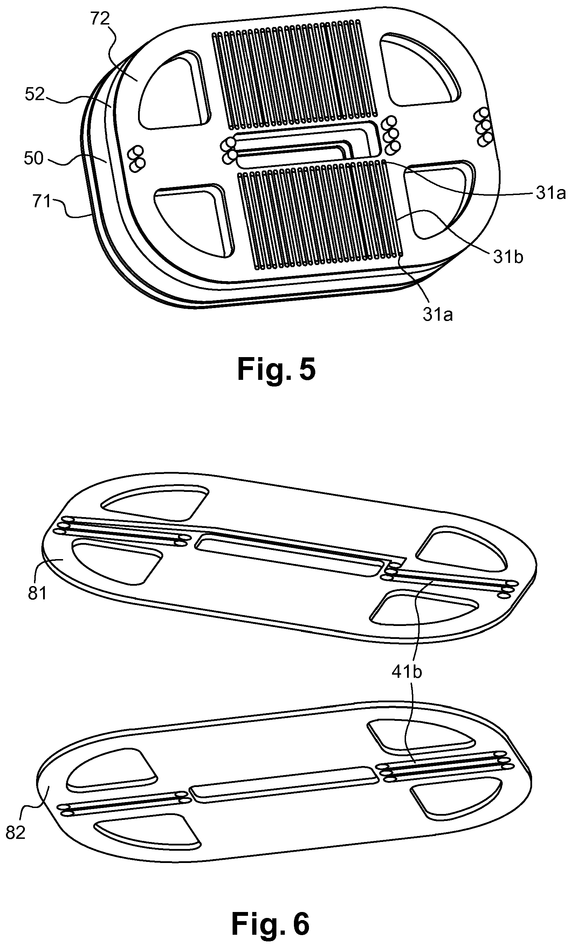

A cet égard, la figure 5 illustre la connexion entre les pions primaires 31a via les pistes primaires 31b.

Le dispositif 10 peut également comprendre deux plaques d'interconnexion secondaires dites, respectivement, plaque secondaire supérieure 82 et plaque secondaire inférieure 81, enserrant, et dans l'ordre, la plaque primaire supérieure, la plaque supérieure, le noyau, la plaque inférieure et la plaque primaire inférieure (figure 1).

Notamment, la plaque secondaire inférieure 81 et la plaque secondaire supérieure 82 sont pourvues chacune sur une de leur face de pistes conductrices, dites pistes secondaires 41b, agencées pour connecter, au niveau de leurs extrémités, les pions secondaires 41a et ainsi former les spires secondaires (figure 6).

La plaque secondaire inférieure 81 et la plaque secondaire supérieure 82 sont par exemple des circuits imprimés, et comprennent si nécessaire des trous au travers desquels peuvent passer les pions secondaires.

Ainsi, les spires secondaires du bobinage secondaire sont formées d'une succession de pions secondaires 41a et de pistes secondaires 41b.

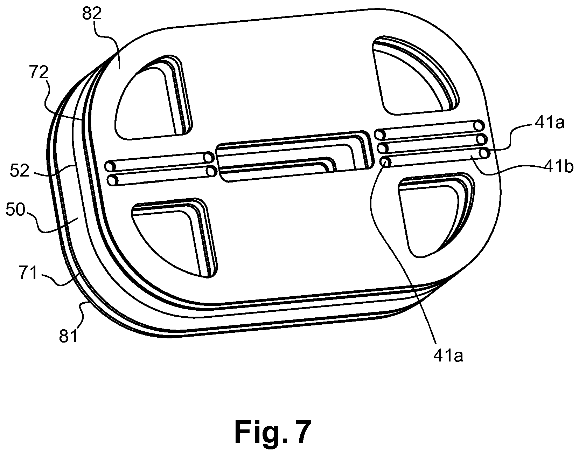

A cet égard, la figure 7 illustre la connexion entre les pions secondaires 41a via les pistes secondaires 41b.

Le dispositif de conversion 10 peut également comprendre une plaque d'isolation supérieur 92, faite d'un matériau électriquement isolant, et disposée entre la plaque secondaire supérieure 82 et la plaque primaire supérieure 72, ainsi qu'une plaque d'isolation inférieure 91, faite d'un matériau électriquement isolant, et disposée entre la plaque secondaire inférieure 81 et la plaque primaire inférieure 71 (figure 1).

Par « électriquement isolante », on entend un matériau diélectrique qui présente une tenue (ou rigidité) diélectrique pour des champs électriques d'intensité inférieure à 6000 V/mm.

La considération de spires formées par des pions et des pistes conductrices permet de faciliter leur formation notamment lorsqu'il s'agit de les intégrer dans un dispositif de conversion d'énergie électromagnétique de petite taille. En effet, un bobinage fait d'un fil conducteur épousera plus difficilement la forme du noyau ferromagnétique dès lors que la taille de ce dernier diminuera.

Par ailleurs, la couronne (ou les premiers et second blocs), qui présente une fonction magnétique, permet la création d'inductances de fuite contrôlées, et ouvre la voie à la mise en œuvre du dispositif de conversion dans une topologie LLC dépourvu de fonction de résonance.

La couronne, et plus particulièrement le boîtier qu'elle forme avec la plaque supérieure et la plaque inférieure, a également une fonction d'écrantage vis-à-vis de l'environnement extérieur. Cet écrantage permet notamment de positionner le dispositif de conversion à proximité d'autres composants, sans affecter leur fonctionnement.

Le boîtier permet également de dissiper la quantité de chaleur générée lorsque le dispositif est en fonctionnement, et permet ainsi d'intégrer plus facilement le dispositif 10 avec les autres éléments d'un chargeur.

La couronne assure également une fonction mécanique et supporte le noyau ferromagnétique ainsi que les bobinages primaire et secondaire.

Par ailleurs, la couronne permet d'augmenter la densité de puissance du convertisseur.

L'invention a été décrite en imposant à l'ensemble des spires primaires d'être formées autour du premier bloc et du noyau, et à l'ensemble des spires secondaire d'être formées autour du second bloc et du noyau. Toutefois, la présente invention couvre également d'autres agencements.

En particulier, un premier ensemble de spires parmi les spires primaires est formée exclusivement autour du premier bloc, et/ou un second ensemble parmi les spires secondaires est formée exclusivement autour du second bloc.

Selon une première alternative, les spires primaires autres que les spires du premier ensemble sont formées autour du noyau ferromagnétique et du premier bloc, et/ou les spires secondaires autres que les spires du second ensemble sont formées autour du noyau magnétique et du second bloc.

Selon une seconde alternative, les spires primaires autres que les spires du premier ensemble sont formées exclusivement autour du noyau ferromagnétique, et/ou les spires secondaires autres que les spires du second ensemble sont formées exclusivement autour du noyau ferromagnétique.

L'agencement des trous et/ou passage des spires primaires et secondaire dans les différents éléments du dispositif 10 est à la portée de l'homme du métier, et est notamment fonction de ces considérations.

## Revendications

1. Dispositif électromagnétique de conversion (10) d'énergie qui comprend :
- un noyau ferromagnétique (20) de forme essentiellement plane et délimité par un contour périphérique (20c), formant un anneau délimité latéralement par le contour périphérique (20c), le contour périphérique (20c) reliant une face supérieure (20a) et une face inférieure (20b) dudit noyau ;
- un bobinage primaire et un bobinage secondaire formés, respectivement, par des spires primaires (31a, 31b) et des spires secondaires (41a, 41b) ; le dispositif comprenant, agencés contre le contour périphérique (20c), un premier bloc (50a) et un second bloc (50b), comprenant un matériau ferromagnétique, et présentant une perméabilité magnétique inférieure à celle du noyau ferromagnétique (20),
le premier bloc (50a) et le second bloc (50b) appartenant à une couronne continue (50) et en appui contre le contour périphérique (20c),
la couronne continue (50) relie une plaque inférieure (51), en appui contre la face inférieure du noyau, et une plaque supérieure (52), en appui contre la face supérieure (20a) du noyau, avantageusement, la plaque supérieure (52), la couronne continue (50) et la plaque inférieure forment un boîtier à l'intérieur duquel est logé le noyau, au
moins une spire primaire (31a, 31b) et/ou au moins une spire secondaire (41a, 41b) est formée autour du ou traversant le premier bloc (50a) et/ou le second bloc (50b) pour former, respectivement, une première inductance de fuite et/ou une seconde inductance de fuite.

2. Dispositif selon la revendication 1, dans lequel l'ensemble des spires primaires (31a, 31b) est formé autour du premier bloc (50a) et du noyau ferromagnétique (20), et/ou l'ensemble des spires secondaires (41a, 41b) est formé autour du second bloc (50b) et du noyau ferromagnétique (20).

3. Dispositif selon la revendication 1, dans lequel un premier ensemble de spires parmi les spires primaires (31a, 31b) est formé exclusivement autour du premier bloc (50a), et/ou un second ensemble parmi les spires secondaires (41a, 41b) est formé exclusivement autour du second bloc (50b).

4. Dispositif selon la revendication 3, dans lequel les spires primaires (31a, 31b) autres que les spires du premier ensemble sont formées autour du noyau ferromagnétique (20) et du premier bloc (50a), et/ou les spires secondaires (41a, 41b) autres que les spires du second ensemble sont formées autour du noyau magnétique et du second bloc (50b).

5. Dispositif selon la revendication 3, dans lequel les spires primaires (31a, 31b) autres que les spires du premier ensemble sont formées exclusivement autour du noyau ferromagnétique (20), et/ou les spires secondaires (41a, 41b) autres que les spires du second ensemble sont formées exclusivement autour du noyau ferromagnétique (20).

6. Dispositif selon l'une des revendications 1 à 5, dans lequel la plaque inférieure (51) et/ou la plaque supérieure (52) comprend une ou plusieurs ouvertures destinées à évacuer la chaleur susceptible d'être générée lors du fonctionnement du dispositif de conversion d'énergie électromagnétique.

7. Dispositif selon l'une des revendications 1 à 6, dans lequel le bobinage primaire et le bobinage secondaire comprennent chacun des pions métalliques dits, respectivement, pions primaires (31a) et pions secondaires (41a), les pions primaires (31a) et les pions secondaires (41a) traversant de part en part la plaque inférieure (51) et la plaque supérieure (52).

8. Dispositif selon la revendication 7, dans lequel le dispositif comprend deux plaques d'interconnexion primaires dites, respectivement, plaque primaire supérieure (72) et plaque primaire inférieure (71), enserrant, et dans l'ordre, la plaque supérieure (52), le noyau et la plaque inférieure (51), la plaque primaire inférieure (71) et la plaque primaire supérieure (72) étant pourvues chacune sur une de leur face de pistes conductrices, dites pistes primaires (31b), agencées pour connecter au niveau de leurs extrémités les pions primaires (31a) et ainsi former les spires primaires (31a, 31b).

9. Dispositif selon la revendication 7 ou 8, dans lequel le dispositif comprend deux plaques d'interconnexion secondaires dites, respectivement, plaque secondaire supérieure (82) et plaque secondaire inférieure (81), enserrant, et dans l'ordre, la plaque primaire supérieure (72), la plaque supérieure (52), le noyau, la plaque inférieure (51) et la plaque primaire inférieure (71), la plaque secondaire inférieure (81) et la plaque secondaire supérieure (82) étant pourvues chacune sur une de leur face de pistes conductrices, dites pistes secondaires (41b), agencées pour connecter au niveau de leurs extrémités les pions secondaires (41a) et ainsi former les spires secondaires (41a, 41b).

10. Dispositif selon la revendication 9, dans lequel une plaque d'isolation Supérieure électriquement isolante est disposée entre la plaque secondaire supérieure (82) et la plaque primaire supérieure (72).

11. Dispositif selon la revendication 9 ou 10, dans lequel une plaque d'isolation inférieure électriquement isolante est disposée entre la plaque secondaire inférieure (81) et la plaque primaire inférieure (71).

12. Dispositif selon l'une des revendications 1 à 11, dans lequel le premier bloc (50a) et le second bloc (50b) présentent une perméabilité magnétique comprise entre 1 et 50.

13. Dispositif selon l'une des revendications 1 à 12, dans lequel le matériau ferromagnétique comprend un matériau de type ferrite, avantageusement dilué dans un polymère.

14. Chargeur pourvu du dispositif selon l'une des revendications 1 à 13.

15. Fiche USB pourvue du chargeur selon la revendication 14.

## Patentansprüche

1. Elektromagnetische Energieumwandlungsvorrichtung (10), die Folgendes umfasst:
- einen ferromagnetischen Kern (20) mit im Wesentlichen ebener Form und begrenzt durch eine Umfangskontur (20c), der einen seitlich von der Umfangskontur (20c) begrenzten Ring bildet, wobei die Umfangskontur (20c) eine Oberseite (20a) und eine Unterseite (20b) des Kerns verbindet;
- eine Primärwicklung und eine Sekundärwicklung, die jeweils aus Primärwicklungen (31a, 31b) und Sekundärwicklungen (41a, 41b) gebildet sind, wobei die Vorrichtung, gegen die Umfangskontur (20c) angeordnet, einen ersten Block (50a) und einen zweiten Block (50b) umfasst, die ein ferromagnetisches Material umfassen, und eine geringere magnetische Permeabilität besitzen als der ferromagnetische Kern (20),
wobei der erste Block (50a) und der zweite Block (50b) zu einem durchgehenden Ring (50) gehören und an der Umfangskontur (20c) anliegen,
der durchgehende Ring (50) eine untere Platte (51), die an der Unterseite des Kerns anliegt, und eine obere Platte (52), die an der Oberseite (20a) des Kerns anliegt, verbindet, wobei vorteilhafterweise die obere Platte (52), der durchgehende Ring (50) und die untere Platte ein Gehäuse bilden, in dem der Kern untergebracht ist,
wobei mindestens eine Primärwicklung (31a, 31b) und/oder mindestens eine Sekundärwicklung (41a, 41b) um den oder durch den ersten Block (50a) und/oder den zweiten Block (50b) gebildet ist, um jeweils eine erste Leckinduktivität und/oder eine zweite Leckinduktivität zu bilden.

2. Vorrichtung nach Anspruch 1, wobei die Gesamtheit der Primärwicklungen (31a, 31b) um den ersten Block (50a) und den ferromagnetischen Kern (20) gebildet ist, und/oder die Gesamtheit der Sekundärwicklungen (41a, 41b) um den zweiten Block (50b) und den ferromagnetischen Kern (20) gebildet ist.

3. Vorrichtung nach Anspruch 1, wobei eine erste Gruppe von Wicklungen unter den Primärwicklungen (31a, 31b) ausschließlich um den ersten Block (50a) gebildet ist, und/oder eine zweite Gruppe unter den Sekundärwicklungen (41a, 41b) ausschließlich um den zweiten Block (50b) gebildet ist.

4. Vorrichtung nach Anspruch 3, wobei die primären Wicklungen (31a, 31b), die nicht die Wicklungen der ersten Baugruppe sind, um den ferromagnetischen Kern (20) und den ersten Block (50a) gebildet sind, und/oder die sekundären Wicklungen (41a, 41b), die nicht die Wicklungen der zweiten Baugruppe sind, um den magnetischen Kern und den zweiten Block (50b) gebildet sind.

5. Vorrichtung nach Anspruch 3, wobei die primären Wicklungen (31a, 31b), die nicht die Wicklungen der ersten Gruppe sind, ausschließlich um den ferromagnetischen Kern (20) gebildet sind, und/oder die sekundären Wicklungen (41a, 41b), die nicht die Wicklungen der zweiten Gruppe sind, ausschließlich um den ferromagnetischen Kern (20) gebildet sind.

6. Vorrichtung nach einem der Ansprüche 1 bis 5, wobei die untere Platte (51) und/oder die obere Platte (52) eine oder mehrere Öffnungen zum Abführen der Wärme umfasst, die bei dem Betrieb der elektromagnetischen Energieumwandlungsvorrichtung erzeugt werden kann.

7. Vorrichtung nach einem der Ansprüche 1 bis 6, wobei die Primärwicklung und die Sekundärwicklung jeweils Metallstifte, Primärstifte (31a) und Sekundärstifte (41a), umfassen, wobei die Primärstifte (31a) und die Sekundärstifte (41a) durchgehend die untere Platte (51) und die obere Platte (52) durchqueren.

8. Vorrichtung nach Anspruch 7, wobei die Vorrichtung zwei primäre Verbindungsplatten umfasst, die jeweils als obere Primärplatte (72) und untere Primärplatte (71) bezeichnet werden, die, in der Reihenfolge, die obere Platte (52), den Kern und die untere Platte (51) umschließen, wobei die untere Primärplatte (71) und die obere Primärplatte (72) jeweils an einer ihrer Stirnseiten mit Leiterbahnen, Primärbahnen (31b), versehen sind, die angeordnet sind, um an ihren Enden die Primärstifte (31a) zu verbinden und so die Primärwicklungen (31a, 31b) zu bilden.

9. Vorrichtung nach Anspruch 7 oder 8, wobei die Vorrichtung zwei sekundäre Verbindungsplatten umfasst, die jeweils als obere Sekundärplatte (82) und untere Sekundärplatte (81) bezeichnet werden, die, in der Reihenfolge, die obere Primärplatte (72) und die obere Platte (52), den Kern, die untere Platte (51) und die untere Primärplatte (71) umschließen, wobei die untere Sekundärplatte (81) und obere Sekundärplatte (82) jeweils an einer ihrer Stirnseiten mit Leiterbahnen, Sekundärbahnen (41b) versehen sind, die angeordnet sind, um an ihren Enden die Sekundärstifte (41a) zu verbinden und so die Sekundärwicklungen (41a, 41b) zu bilden.

10. Vorrichtung nach Anspruch 9, wobei zwischen der oberen Sekundärplatte (82) und der oberen Primärplatte (72) eine obere elektrisch isolierende Isolierplatte angeordnet ist.

11. Vorrichtung nach Anspruch 9 oder 10, wobei zwischen der unteren Sekundärplatte (81) und der unteren Primärplatte (71) eine untere elektrisch isolierende Isolierplatte angeordnet ist.

12. Vorrichtung nach einem der Ansprüche 1 bis 11, wobei der erste Block (50a) und der zweite Block (50b) eine magnetische Durchlässigkeit zwischen 1 und 50 besitzen.

13. Vorrichtung nach einem der Ansprüche 1 bis 12, wobei das ferromagnetische Material ein ferritartiges Material umfasst, vorteilhafterweise in einem Polymer verdünnt.

14. Ladegerät, das mit der Vorrichtung nach einem der Ansprüche 1 bis 13 versehen ist.

15. USB-Stecker, der mit dem Ladegerät nach Anspruch 14 versehen ist.

## Claims

1. An electromagnetic device for converting energy (10) which comprises:
- a ferromagnetic core (20) of essentially planar shape and delimited by a peripheral contour (20c), forming a ring laterally delimited by the peripheral contour (20c), the peripheral contour (20c) connecting an upper face (20a) and a lower face (20b) of said core.
- a primary winding and a secondary winding formed, respectively, by primary turns (31a, 31b) and secondary turns (41a, 41b);
the device comprising, arranged against the peripheral contour (20c), a first block (50a) and a second block (50b), comprising a ferromagnetic material, and having a magnetic permeability lower than that of the ferromagnetic core (20)
the first block (50a) and the second block (50b) belonging to a continuous crown (50) bearing against the peripheral contour (20c),
the continuous crown (50) connects a lower plate (51), bearing against the lower face of the core, and an upper plate (52), bearing against the upper face (20a) of the core, advantageously, the upper plate (52), the continuous crown (50) and the lower plate form a casing inside which the core is housed,
at least one primary turn (31a, 31b) and/or at least one secondary turn (41a, 41b) is formed around or through the first block (50a) and/or the second block (50b) to form, respectively, a first leakage inductance and/or a second leakage inductance

2. The device according to claim 1, wherein the set of primary turns (31a, 31b) is formed around the first block (50a) and the ferromagnetic core (20), and/or the set of secondary turns (41a, 41b) is formed around the second block (50b) and the ferromagnetic core (20).

3. The device according to claim 1, wherein a first set of turns of the primary turns (31a, 31b) is formed exclusively around the first block (50a), and/or a second set of the secondary turns (41a, 41b) is formed exclusively around the second block (50b).

4. The device according to claim 3, wherein the primary turns (31a, 31b) other than the turns of the first set are formed around the ferromagnetic core (20) and the first block (50a), and/or the secondary turns (41a, 41b) other than the turns of the second set are formed around the magnetic core and the second block (50b).

5. The device according to claim 3, wherein the primary turns (31a, 31b) other than the turns of the first set are formed exclusively around the ferromagnetic core (20), and/or the secondary turns (41a, 41b) other than the turns of the second set are formed exclusively around the ferromagnetic core (20).

6. The device according to any one of claims 1 to 5, wherein the lower plate (51) and/or the upper plate (52) comprises one or more openings for removing heat likely to be generated during the operation of the electromagnetic device for converting energy.

7. The device according to any one of claims 1 to 6, wherein the primary winding and the secondary winding each comprise metal pins called, respectively, primary pins (31a) and secondary pins (41a), the primary pins (31a) and the secondary pins (41a) passing right through the lower plate (51) and the upper plate (52).

8. The device according to claim 7, wherein the device comprises two primary interconnection plates called, respectively, the upper primary plate (72) and lower primary plate (71), sandwiching the upper plate (52), the core and the lower plate (51), in this order, the lower primary plate (71) and the upper primary plate (72) each being provided on one of their faces with conductive tracks, called primary tracks (31b), arranged to connect the primary pins (31a) at their ends and thus form the primary turns (31a, 31b).

9. The device according to claim 7 or 8, wherein the device comprises two secondary interconnection plates called the upper secondary plate (82) and lower secondary plate (81), respectively, sandwiching the upper primary plate (72), the upper plate (52), the core, the lower plate (51) and the lower primary plate (71), in this order, the lower secondary plate (81) and the upper secondary plate (82) each being provided on one of their faces with conductive tracks, called secondary tracks (41b), arranged to connect the secondary pins (41a) at their ends and thus form the secondary turns (41a, 41b).

10. The device according to claim 9, wherein an electrically insulating upper insulation plate is disposed between the upper secondary plate (82) and the upper primary plate (72).

11. The device according to claim 9 or10, wherein an electrically insulating lower insulation plate is disposed between the lower secondary plate (81) and the lower primary plate (71).

12. The device according to one of claims 1 to 11, wherein the first block (50a) and the second block (50b) have a magnetic permeability of between 1 and 50.

13. The device according to one of claims 1 to 12, wherein the ferromagnetic material comprises a ferrite type material, advantageously diluted in a polymer.

14. A charger provided with the device according to one of claims 1 to 13.

15. A USB plug provided with the charger according to claim 14.
